(19)

Europäisches
Patentamt
European
Patent Office
Office européen
des brevets

(11) **EP 2 087 994 A1**

(12) **EUROPEAN PATENT APPLICATION**
published in accordance with Art. 153(4) EPC

(43) Date of publication:
**12.08.2009 Bulletin 2009/33**

(51) Int Cl.:
*B32B 27/30* [(2006.01)]   *B29C 55/12* [(2006.01)]
*B29C 61/06* [(2006.01)]   *B65D 23/08* [(2006.01)]
*B65D 65/40* [(2006.01)]   *B29K 105/02* [(2006.01)]
*B29L 7/00* [(2006.01)]    *B29L 9/00* [(2006.01)]

(21) Application number: **07832495.1**

(22) Date of filing: **26.11.2007**

(86) International application number:
**PCT/JP2007/072770**

(87) International publication number:
**WO 2008/065998 (05.06.2008 Gazette 2008/23)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **27.11.2006 JP 2006318264**

(71) Applicant: **PS Japan Corp.
Bunkyo-ku, Tokyo 112-0002 (JP)**

(72) Inventors:
• **KAWASAKI, Toshiharu
Tokyo 100-8440 (JP)**
• **YAMAMOTO, Takehiro
Tokyo 100-8440 (JP)**

(74) Representative: **Bradley, Josephine Mary
D Young & Co
120 Holborn
London EC1N 2DY (GB)**

(54) **HEAT SHRINKABLE MULTILAYER FILM**

(57)    Disclosed is a heat shrinkable multilayer film obtained by at least uniaxially stretching a multilayer film which comprises outer layers mainly composed of a block copolymer resin (a) composed of a vinyl aromatic monomer and a conjugated diene monomer, and an intermediate layer mainly composed of a resin (c) wherein a component made from a rubber elastic body (b) is contained in the form of dispersed particles in a continuous phase of a styrene polymer which is composed or a vinyl aromatic monomer and an n-butyl acrylate. The rubber plastic body (b) is a block copolymer composed of 20-45% bey weight of a vinyl aromatic monomers and 80-55% by weight of a conjugated diene monomer, and the rubber elastic body (b) content in the resin (c) is 3-20% by weight. The resin composition of the continuous phase of the resin (c) is composed of 78-93% by weight of a vinyl aromatic monomer and 22-7% by weight of an n-butyl acrylate, and the resin (c) has a Vicat softening temperature of 60-85˚C.

EP 2 087 994 A1

**Description**

FIELD OF THE INVENTION

The present invention relates to a heat shrinkable multilayer film which is suitable for use as a heat shrinkable film for a shrink label of a PET bottle and the like, and is excellent in printing resistance with less deterioration of mechanical properties after printing with an oily ink and further excellent in low-temperature processability such as shrinkability, mechanical strength, practical shrinkability, recyclability of waste materials and interlayer adhesion.

BACKGROUND ART

As the heat shrinkable film used for packaging a container such as a PET bottle, several proposals have been made for a heat shrinkable polystyrene film which is obtained by laminating a rubber elastic material dispersed polystyrene resin as an intermediate layer and a block copolymer composed of a vinyl aromatic hydrocarbon and a conjugated diene hydrocarbon as front and back layers (inner and outer layers), because it is excellent in transparency, natural shrinking properties, heat fusion resistance and shrinkage finish properties.

For example, the following Patent Document 1 discloses a heat shrinkable multilayer film in which a high impact polystyrene resin is used as an intermediate layer and a styrene-butadiene copolymer composed of styrene and butadiene is used as front and back layers and further the heat shrinkage ratio and natural shrinkage ratio etc. are specified, in order to obtain a heat shrinkable multilayer film which is excellent in heat shrinkability, natural shinking properties and firmness which are not obtained by a single layer film.

The following Patent Document 2 discloses a heat-shrinkable polystyrene multilayer film in which a resin containing a rubber elastic material as dispersed particles in a continuous phase of a styrene copolymer composed of a styrene monomer and a (meth)acrylic ester monomer is used as an intermediated layer, and a block copolymer etc. composed of a vinyl aromatic hydrocarbon and a conjugated diene hydrocarbon is used as front and back layers, and further the Vicat softening temperature of the resins of the intermediate layer and front and back layers (or both the outer layers) and the heat shrinkage ratio of a stretched film are specified, in order to obtain a heat-shrinkable polystyrene multilayer film which is small in the natural shrinkage ratio and is improved in heat fusion resistance, transparency and shrinkage finish properties.

The following Patent Document 3 discloses a heat-shrinkable polystyrene multilayer film in which a rubber elastic material dispersed polystyrene resin is used as an intermediate layer, and a block copolymer composed of a vinyl aromatic hydrocarbon and a conjugated diene hydrocarbon or a mixed copolymer obtained by blending a styrene polymer with the block copolymer and the like is used as a main component of front and back layers, and further the heat shrinkage ratio of a stretched film is specified, in order to obtain a heat-shrinkable polystyrene multilayer film which is small in the natural shrinkage ratio and is improved in heat fusion resistance, transparency and shrinkage finish properties.

The following Patent Document 4 discloses a heat-shrinkable polystyrene multilayer film in which a resin obtained by blending a block copolymer composed of a vinyl aromatic hydrocarbon and a conjugated diene hydrocarbon with a rubber elastic material-dispersed polystyrene resin is used as an intermediate layer, and a resin mainly composed of a block copolymer composed of a vinyl aromatic hydrocarbon and a conjugated diene hydrocarbon is used as front and back layers, and further the heat shrinkage ratio of a stretched film is specified, in order to obtain a heat-shrinkable polystyrene multilayer film which is small in the natural shrinkage ratio and is improved in heat fusion resistance, transparency and shrinkage finish properties.

However, in a film described in Patent Document 1, the film becomes opaque because a high impact polystyrene resin is used as an intermediate layer. When the film is used for wrapping a container and the like, it has a problem that the design properties are deteriorated, for example, the contents are not visible.

In addition, in a film describes in Patent Documents 2 to 4, a device is made to substantially adjust the refractive index between a rubber elastic material and a continuous phase of a styrene copolymer, to impart an excellent transparency to a rubber elastic material dispersed polystyrene resin used for the intermediate layer or the front and back layers or a resin containing a rubber elastic material as dispersed particles in a continuous phase of a styrene copolymer composed of a styrene monomer and a (meth)acrylic ester monomer. The composition has a high content of a (meth) acrylic ester, that is, it has a styrene content of 46 to 56% by weight and a (met)acrylic ester content of 54 to 44% by weight, in terms of raw material composition of styrene-methyl methacrylate (MMA)-butyl acrylate (BA). Further, the content of butyl acrylate in the (meth)acrylic ester is 8 to 10% by weight and the other major portion is methyl methacrylate. The heat-shrinkable polystyrene multilayer film used for wrapping a container such as a PET bottle is generally gravure printed from the viewpoint of design, contents display, advertisement and the like. When a copolymer having a higher ratio of the content of the (meth)acrylic ester is printed with an oily ink, it is relatively readily eroded with the solvents used in the printing ink (generally, esters such as ethyl acetate and alcohols such as isopropyl alcohol). In a film in which a copolymer having a higher ratio of the (meth)acrylic ester content is used for front and back layers (or inner and outer layers) or as an intermediate layer, there may occur breakage when winding a film after printing or a poor appearance due to surface skin roughness or the like, for which improvement is desired.

In addition, in recent years, from the viewpoint of recycling a plastic container represented by a PET bottle, a device is made to easily separate a bottle from a label by perforating a label to easily tear off the label. In a label using a heat shrinkable multilayer film which is composed of an intermediate layer composed of a resin containing rubber elastic material dispersed particles described in Patent Documents 2 to 4 and a large amount of a(meth)acrylic ester in a continuous layer and front and back layers mainly composed of a block copolymer composed of a styrene monomer and a conjugated diene monomer, it has a problem that a bottle and a label are difficult to separate because an interlayer peeling-off is generated at the time of tearing off, and thus improvement of interlayer adhesion is desired.

Patent Document 1: JP-A-9-272182
Patent Document 2: JP-A-11-291413
Patent Document 3: JP-A-2000-932
Patent Document 4: JP-A-2001-1466

DISCLOSURE OF THE INVENTION

PROBLEMS TO BE SOLVED BY THE INVENTION

It is an object of the present invention to provide a heat shrinkable multilayer film which is excellent in printing resistance with less deterioration of mechanical properties after printing with an oily ink and further excellent in low-temperature processability such as shrinkability, mechanical strength, practical shrinkability, recyclability of waste materials and interlayer adhesion.

MEANS FOR SOLVING THE PROBLEMS

As a result of earnest studies, the present inventors have found that there may be obtained a heat shrinkable multilayer film which is excellent in balance between transparency and mechanical strength and printing resistance with less deterioration of mechanical properties after printing with an oily ink and further excellent in interlayer adhesion, by use of a resin defining the amount of the resin retained in the dispersed particles (hereinafter referred to as occluded resin) and the graft amount, and the rubber crosslinking degree of the dispersed particles and further the dispersed particle size, in a region where the difference in refractive index between the continuous phase resin and the rubber elastic material is substantially large by incorporating as dispersed particles a component made from a rubber elastic material composed of a vinyl aromatic monomer-conjugated diene monomer block copolymer having a specific composition in a continuous phase of a copolymer having a specific composition composed of a vinyl aromatic monomer and n-butyl acrylate as an intermediate layer resin, and have completed the present invention.

That is, the present invention comprises the followings.

(1) A heat shrinkable multilayer film obtained by at least uniaxially stretching a multilayer film comprising both outer layers mainly composed of a block copolymer resin (a) comprising of a vinyl aromatic monomer unit and a conjugated diene monomer unit, and an intermediate layer mainly composed of a resin (c) containing as dispersed particles a component made from a rubber elastic material (b) in a continuous phase of a styrene copolymer comprising a vinyl aromatic monomer unit and an n-butyl acrylate unit, wherein the rubber elastic material (b) is a block copolymer comprising 20 to 45% by weight of a vinyl aromatic monomer unit and 80 to 55% by weight of a conjugated diene monomer unit, a content of the rubber elastic material (b) in the resin (c) is 3 to 20% by weight, a resin composition of the continuous phase of the resin (c) comprises of 78 to 93% by weight of a vinyl aromatic monomer unit and 22 to 7% by weight of an n-butyl acrylate unit and the resin (c) has a Vicat softening temperature of 60 to 85˚C.

(2) A heat shrinkable multilayer film described in (1), wherein the resin (a) is a block copolymer resin which comprises 65 to 85% by weight of a vinyl aromatic monomer unit and 35 to 15% by weight of a conjugated diene monomer unit and has a Vicat softening temperature of 65 to 85˚C.

(3) A heat shrinkable multilayer film described in (1) or (2), wherein the intermediate layer contains 0.01 to 4 parts by weight of a plasticizer based on 100 parts by weight of the resin (c).

(4) A heat shrinkable multilayer film described in (3), wherein the plasticizer contained in the intermediate layer is paraffin oil.

(5) A heat shrinkable multilayer film described in any one of (1) to (4), wherein the resin (c) has a ratio of a methyl ethyl ketone insoluble portion at 25˚C to the rubber elastic material (b) in the insoluble portion in a range of 1.3 to 3.2 and a swelling index with methyl ethyl ketone of from 2.5 to 5.5, and the dispersed particles have an average particle size of from 0.2 to 1.3 μm.

(6) A heat shrinkable multilayer film described in any one of (1) to (5), wherein a solvent swelling index of the resin (c) is less than 12% by weight after immersion in a solvent composed of 40% by weight of ethyl acetate and 60% by weight of isopropyl alcohol at 25˚C for 10 minutes.

(7) A heat shrinkable multilayer film described in any one of (1) to (6), wherein in the resin (c), the dispersed particles have a refractive index of from 1.540 to 1.585 and an absolute value of a difference in refractive index between the continuous phase of the resin (c) and the dispersed particles is 0.025 or less.

(8) A heat shrinkable multilayer film described in any one of (1) to (7), wherein the resin of the intermediate layer is one in which 0.01 to 100 parts by weight of the resin (a) is mixed based on 100 parts by weight of the resin (c) and an absolute value of a difference in refractive index between the resin (c) and the resin (a) is 0.03 or less.

(9) A heat shrinkable multilayer film described in any one of (1) to (8), wherein the stretching magnification ratio in a main stretching direction is 3 to 8 times, a stretching magnification ratio in an orthogonal direction to the main stretching direction is 1 to 2 times, a shrinkage ratio in the main stretching direction in hot water at 75˚C for 10 seconds is 10% or more and a ratio of the shrinkage ratio in hot water at 90˚C for 10 seconds to the shrinkage ratio in hot water at 75˚C for 10 seconds is 7 or less.

(10) A container on which a heat shrinkable multilayer film described in any one of (1) to (9) is heat-shrink mounted.

ADVANTAGES OF THE INVENTION

A heat shrinkable multilayer film of the present invention is excellent in printing resistance with less deterioration of mechanical properties after printing with an oily ink and further excellent in low-temperature processability such as shrinkability, mechanical strength, practical shrinkability, recyclability of waste materials and interlayer adhesion. Since the heat shrinkable multilayer film of the present invention is also especially excellent in low-temperature shrinkability, it can be mounted to, for example, a PET bottle (for aseptic products and the like) which is inferior in heat resistance, or a polyethylene bottle and the like without deforming the bottle.

BEST MODE FOR CARRYING OUT THE INVENTION

Hereinafter, the present invention will be further described in detail.

In the present invention, the block copolymer resin (a) used in both outer layers, which comprises a vinyl aromatic monomer and a conjugated diene monomer, is obtained by polymerizing a vinyl aromatic monomer and a conjugated diene monomer using an organic lithium compound as an initiator in an organic solvent.

The vinyl aromatic monomer used for the resin (a) includes styrene, α-methylstyrene, o-methylstyrene, m-methylstyrene and p-methylstyrene, and an especially common one is styrene. They may be used alone or may be used by mixing two or more kinds.

The conjugated diene is a diolefin having a pair of conjugated double bonds and includes, for example, 1,3-butadiene, 2-methyl-1,3-butadiene (isoprene), 2,3-dimethyl-1,3-butadiene, 1,3-pentadiene and 1,3-hexadiene. They may be used alone or may be used by mixing two or more kinds. Especially preferred are 1,3-butadiene and isoprene, and the weight ratio of 1,3-butadiene to isoprene in the block copolymer is preferably from 97:3 to 20:80, more preferably from 90:10 to 25:75 and further more preferably from 85:15 to 30:70. If the weight ratio is within the above range, a copolymer with less fish-eye may be obtained.

The structure of the resin (a) and the structure of each block segment are not particularly limited. The structure of the block copolymer includes, for example, a linear type and a star type. In addition, the structure of each block segment includes, for example, completely symmetric block, asymmetric block, tetra-block, tapered block and random block. These block copolymers may be used alone or may be used by mixing two or more kinds as the material for both outer layers.

In the resin (a), the block mainly composed of a vinyl aromatic monomer has a number average molecular weight preferably of 5000 or more, more preferably from 7000 to 100000 and further more preferably from 10000 to 80000. In addition, the block mainly composed of a conjugated diene has a number average molecular weight preferably from 5000 to 200000, more preferably from 7000 to 100000 and further more preferably from 10000 to 100000. Further, a number average molecular weight of the whole block copolymer is preferably from 20000 to 500000, more preferably from 20000 to 400000 and further more preferably from 30000 to 300000. When there is used the block copolymer having a molecular weight within the above range, there may be readily obtained a sheet or film which is excellent in mechanical strength, processability and low-temperature shrinkability. The especially preferred block copolymer has a melt flow rate (200˚C, a load of 49 N) of from 0.1 to 50 g/10 min and preferably from 1 to 20 g/10 min. from the viewpoint of moldability. In addition, the number average molecular weight can be measured by gel permeation chromatography (hereinafter referred to as GPC) in terms of polystyrene.

The composition of the structural component of the block copolymer of the resin (a) comprises preferably 65 to 85% by weight of a vinyl aromatic monomer and 35 to 15% by weight of a conjugated diene monomer, more preferably 68 to 82% by weight of a vinyl aromatic monomer and 32 to 18% by weight of a conjugated diene monomer and further more preferably 70 to 80% by weight of a vinyl aromatic monomer and 30 to 20% by weight of a conjugated diene monomer, from the viewpoint of mechanical strength, rigidity and generation of gel in the extruder.

The resin (a) preferably has a Vicat softening temperature of from 65 to 85°C, more preferably from 67 to 83°C and further more preferably from 70 to 81°C, from the viewpoint of the reduction of the natural shrinking properties (shrinking at the time of storage) of a film and the blocking of films. The Vicat softening temperature of the resin (a) can be changed by adjusting the weight ratio of the amount of the vinyl aromatic monomer to the amount of the conjugated diene monomer or the block structure. It is only required for the both outer layers to contain 70% by weight or more of the resin (a) which is the main component, and there may be blended a styrene polymer, a styrene copolymer, copolymerized elastomers composed of a vinyl aromatic monomer and a conjugated diene monomer or the resin (c) used as the intermediate layer in an amount of 30% by weight or less, when necessary, so long as the object of the present invention is not impaired.

In the present invention, the resin (c), a main component of the intermediate layer, is a resin which contains as dispersed particles a component made from the rubber elastic material (b) in the continuous phase of a styrene copolymer composed of a vinyl aromatic monomer and n-butyl acrylate.

The continuous phase of the resin (c) has a composition of 78 to 93% by weight of a vinyl aromatic monomer and 22 to 7% by weight of n-butyl acrylate, more preferably of 80 to 91% by weight of a vinyl aromatic monomer and 20 to 9% by weight of n-butyl acrylate and more preferably of 81 to 90% by weight of a vinyl aromatic monomer and 19 to 10% by weight of n-butyl acrylate. If the composition is within the above range, the resulting heat shrinkable multilayer film may obtain excellent printing resistance with less deterioration of mechanical properties after printing with an oily ink and less change in surface appearance and excellent adhesion between the front and back layers and the intermediate layer. The vinyl aromatic monomer used as the continuous phase in the resin (c) includes styrene, α-methylstyrene, o-methylstyrene, m-methylstyrene and p-methylstyrene, and an especially common one is styrene. They may be used alone or may be used by mixing two or more kinds. In addition, the monomer copolymerizable with a vinyl aromatic monomer, acrylonitrile, methacrylic acid, methyl methacrylate and the like may be copolymerized at a ratio of 5% by weight or less of the continuous layer. Further, as detailed later, the solvent swelling index of the resin (c) obtained at that time is preferably less than 12% by weight after it is immersed in a solvent (40% by weight of ethyl acetate and 60% by weight of isopropyl alcohol) at 25°C for 10 minutes.

In the present invention, the dispersed particles contained in the resin (c) are composed of the rubber elastic material (b) which is a raw material, a graft resin added to the rubber elastic material (b) and occluded resin incorporated in particles.

In the present invention, the rubber elastic material (b) is a block copolymer composed of 20 to 45% by weight of a vinyl aromatic monomer and 80 to 55% by weight of a conjugated diene monomer, preferably 24 to 38% by weight of a vinyl aromatic monomer and 76 to 62% by weight of a conjugated diene monomer and more preferably 28 to 36% by weight of a vinyl aromatic monomer and 72 to 64% by weight of a conjugated diene monomer. When the amount of a vinyl aromatic monomer is less than 20% by weight and the amount of a conjugated diene monomer exceeds 80% by weight, the resin (c) is excellent in mechanical strength. However, because of too large difference in refractive index between the continuous phase of the resin (c), that is, a copolymer of a vinyl aromatic monomer with n-butyl acrylate and the dispersed particles made from the rubber elastic material (b), the resin (c) is not preferable because it is inferior in transparency (the haze becomes large). On the other hand, when the amount of a vinyl aromatic monomer exceeds 45% by weight and the amount of a conjugated diene monomer is less than 55% by weight, the resin (c) is improved in transparency. However, the size of the dispersed particle in the resin (C) becomes small, and it is difficult to have a cellular structure or a core-shell structure which is excellent in mechanical strength, since the rubber elastic material (b) is improved in compatibility with the resin of the continuous phase of resin (c), therefore it is not preferable because it is inferior in mechanical strength.

As for the vinyl aromatic monomer and conjugated diene monomer used for the rubber elastic material (b), there may used one similar to the monomer used for the resin (a). The structure of the rubber elastic material (b) is not particularly limited, but in controlling the refractive index of the dispersed particles in the resin (c) made from the resin (b) and the structure and particle size of the dispersed particles, preferred is a block copolymer having at least one or more each of a block mainly composed of a vinyl aromatic monomer and a block mainly composed of a conjugated diene monomer. The term "a block mainly composed of a vinyl aromatic monomer" used here refers to a block containing 80% by weight or more of a vinyl aromatic monomer in the block structure. Similarly, the term "a block mainly composed of a conjugated diene monomer" refers to a block containing 80% by weight or more of a conjugated diene monomer in the block structure.

The content of the rubber elastic material (b) in the resin (c) is from 3 to 20% by weight, preferably from 5 to 18% by weight and more preferably from 8 to 16% by weight. If the content is less than 3% by weight, the resin (c) is not preferable because it is inferior in mechanical strength. On the other hand, if the content exceeds 20% by weight, the resin (c) is not preferable because it has too low rigidity.

In the present invention, the resin (c) used for the intermediate layer has a Vicat softening temperature of from 60 to 85˚C, more preferably from 65 to 83˚C and further more preferably from 68 to 80˚C. If the Vicat softening temperature of the resin (c) is less than 60˚C, the resulting heat shrinkable multilayer film becomes a so-called film having a large natural shrinkage ratio, which shrinks during storage at a relatively high temperature and it may be unusable as a heat shrinkable multilayer film in some cases. Further, it is difficult to cool the resin (c) during production, thereby decreasing the production efficiency in some cases, which is unfavorable. On the other hand, when the Vicat softening temperature of the resin (c) exceeds 85˚C, the processability at a low temperature is decreased and the low-temperature shrinkability is significantly decreased, which is not preferable. In addition, in the present invention, the resin (c) of the intermediate layer may be mixed with two or more kinds of resins having different Vicat softening temperatures. In heating and shrinking a film obtained by using resins having different Vicat softening temperatures, the film can be slowly shrunk according to the heating temperature, thereby enabling to produce a film excellent in finish when mounting on a container. However, at that time, it is essential that the Vicat softening temperature of the resin (c), the resin composition of the continuous layer and the content of the rubber elastic material (b) composed of rubber dispersed particles are within the range of the present invention. The Vicat softening temperature of the resin (c) can be changed by controlling the weight ratio of a vinyl aromatic monomer to n-butyl acrylate of the continuous layer.

If the Vicat softening temperature is kept constant, the introducing amount of n-butyl acrylate may be reduced and the solvent resistance may be improved by blending a plasticizer in the resin (c). However, excessive addition is not desirable because the plasticizer is precipitated as oil spot at the die during the extrusion and molding processes for a long time and is mixed in a product in some cases. The addition amount of the plasticizer is preferably from 0 to 4 parts by weight, more preferably from 0.01 to 4 parts by weight and further more preferably from 0.02 to 3 parts by weight, based on 100 parts by weight of the resin (c). The plasticizer includes paraffin oil, an epoxidized soybean oil, epoxidized linseed oil and bis(2-ethylhexyl) adipate, and especially preferred is a paraffin oil.

The resin (c) has a ratio of a methyl ethyl ketone insoluble portion at 25˚C to the rubber elastic material in the insoluble portion in the range of 1.3 to 3.2, more preferably in the range of 1.5 to 3.0 and further more preferably in the range of 1.6 to 2.5. The ratio is an indicator showing how much of the rubber dispersed particles (the rubber elastic material (b) + the occluded resin + the graft resin) are increased relative to the rubber elastic material (b) in the insoluble portion. In general, as the compatibility of the rubber elastic material with the resin of the continuous phase is increased, the ratio becomes higher. If the ratio is adjusted within above range, a resin having more excellent transparency may be produced because the difference in refractive index between the rubber dispersed particles and the continuous layer becomes small. And further, a resin having more excellent mechanical strength may be produced because it becomes easy for the shape of the rubber dispersed particles stably to have a cellular structure or a core-shell structure. In addition, the methyl ethyl ketone insoluble portion can be changed by controlling the graft amount for the rubber elastic material by the polymerization initiator amount, the chain transfer agent amount and the like during production of the resin.

The methyl ethyl ketone insoluble portion was measured as follows: 1 g of the resin (c) was precisely weighed in a sedimentation tube and was dissolved in 20 ml of methyl ethyl ketone at 25˚C over one hour. Thereafter, the resulting solution was centrifuged at 20000 rpm at 10˚C or lower for one hour (using himac CR20 Rotor 46, manufactured by Hitachi Koki Co., Ltd.) and the supernatant was removed by decantation (the sedimentation tube was slanted to approximately 45˚ angle and held for approximately 3 seconds), followed by drying at 160˚C under atmospheric pressure for 45 minutes using a dryer. Subsequently, the sedimentation tube was dried at 160˚C under vacuum for 15 minutes to measure the weight of the methyl ethyl ketone insoluble portion (the weight after drying). In addition, the weight of the insoluble portion containing the methyl ethyl ketone before drying was measured as the weight before drying.

The rubber elastic material in the methyl ethyl ketone insoluble portion was calculated by 1 g × the content percentage of the fed rubber elastic material in the raw material solution/the solids content percentage in the polymerization solution after completion of the polymerization, as the amount of the rubber elastic material in 1 g of the resin. For example, when the content percentage of the fed rubber elastic material in the raw material solution is 12% by weight and the solids content percentage in the polymerization solution after completion of the polymerization is 80% by weight, the rubber elastic material in 1 g of the resin is 0.15 g (= 1 × (12/100)/(80/100).

The resin (c) has a swelling index with methyl ethyl ketone of preferably from 2.5 to 5.5, more preferably from 2.7 to 5.1 and further more preferably from 3.0 to 4.8. The swelling index is an indicator showing a crosslinking degree of the rubber dispersed particles, and the smaller the index is, the larger the crosslinkage. If the swelling index is adjusted within the above range, there may be obtained a film in which the rubber dispersed particles are adequately crosslinked and which is more excellent in mechanical strength and is more excellent in transparency and appearance with less appearance change due to the deformation of the rubber particles. In addition, the swelling index can be changed by changing the temperature when unreacted monomers during the resin production are deaerated and controlling the crosslinking degree.

The swelling index with methyl ethyl ketone was calculated by the ratio of the above weight before drying/the weight after drying.

The rubber dispersed particles of the resin (c) have an average particle size of preferably from 0.2 to 1.3 $\mu$m, more preferably from 0.2 to 1.0 $\mu$m and further more preferably from 0.5 to 1.0 $\mu$m from the viewpoint of transparency, appearance and mechanical strength. The average particle size of the resin was calculated by the following equation by taking a transmission electron microscope photograph by an ultra thin sectioning method and measuring the particle size of 1000 particles in the photograph.

The average particle size = $\Sigma(ni \times Di^4)/\Sigma(ni \times Di^3)$ (However, ni is the number of the rubber particles having a particle size of Di. And, Di is determined by the average value of the major and minor diameter of the particles.) Although the average particle size depends on the kind and the molecular weight of the rubber elastic material (b), it can be controlled by the initiator mount and the chain transfer agent amount during production of the resin (c) or the rotation number of the stirrer during polymerization. In addition, in the present invention, as the intermediate layer resin, there may used two or more kinds of the resins (c) having different particle size distributions. For example, it is also possible to produce a film which is excellent both in transparency and mechanical strength by using a resin having a small average particle size and a resin having a large average particle size and mixing them together when forming a film. However, in that case, the average particle size is preferably within the above range.

The solvent swelling index of the resin (c) is preferably less than 12% by weight and more preferably 10% by weight or less after it is immersed in a solvent composed of 40% by weight of ethyl acetate and 60% by weight of isopropyl alcohol at 25˚C for 10 minutes. The solvent swelling index is measured by using a disk-like sample having a diameter of 25 mm and a thickness of 0.8 mm. The solvent swelling index is an indicator showing solvent resistance to a solvent contained in a printing ink, and the smaller the index, the higher the solvent resistance. Generally, even if both outer layers are covered with a resin relatively resistant to an ink solvent when a film is printed, the solvent reaches the intermediate layer due to the effect of solvent soaking or the like and the solvent resistance of the intermediate layer material may have an impact on physical properties and appearance of the film. These phenomena are significant, as the thickness of the both outer layers is thinner. If the solvent swelling index of the resin (c) is adjusted within the above range, a film is less degraded in physical properties even when it is printed and no breakage occurs even when a thin film is taken up while printing. In addition, there may be produced a film having less appearance change due to the surface roughness after printing or the like. Further, as the ink solvent, an ester solvent or an alcoholic solvent is generally used. In particular, ethyl acetate as the ester solvent and isopropyl alcohol as the alcoholic solvent are widely used.

In the present invention, the absolute value in the difference in refractive index between the continuous phase of the resin (c) and the dispersed particles of the resin (c) is preferably 0.025 or less and more preferably 0.02 or less from the viewpoint of transparency.

The refractive index of the continuous layer of the resin (c) can be changed by adjusting the amount of a vinyl aromatic monomer and the amount of a n-butyl acrylate monomer used in the continuous layer. The supernatant, which was obtained after the centrifugation is carried out in the measurement of the above methyl ethyl ketone insoluble portion, was reprecipitated in methanol and then filtered off to recover the continuous layer resin. Thereafter, the continuous layer resin was dried and molded into a film having a thickness of 0.2 mm. The refractive index of the continuous layer was measured by using the film at 25˚C with an Abbe's refractometer.

The refractive index of the dispersed particles of the resin (c) can be changed by controlling the amount of a vinyl aromatic monomer and the amount of a conjugated diene monomer of the rubber elastic material (b) which are a raw material and further the graft resin amount and occluded resin amount in the dispersed particles. Although the difference in refractive index with the continuous phase may be reduced by increasing the amount of a vinyl aromatic monomer, since the amount of a vinyl aromatic monomer has a limitation in mechanical strength, the refractive index is preferably changed by controlling the graft resin amount and the occluded resin amount and the like. The dispersed particles have a refractive index of preferably from 1.540 to 1.585, more preferably from 1.550 to 1.580, further more preferably from 1.551 to 1.575 and still further more preferably from 1.555 to 1.570. The above methyl ethyl ketone insoluble portion was recovered and dried to form into a film having a thickness of 0.2 mm. The refractive index of the dispersed particles of the resin (c) was measured by using the film at 25˚C with an Abbe refractometer.

The blending amount of the resin (a) into the intermediate layer is preferably 0.01 to 100 parts by weight and more preferably 0.1 to 80 parts by weight based on 100 parts by weight of the resin (c) which is the main component. The blending of the resin (a) into the resin (c) has an effect of increasing adhesion between the intermediate layer and the both outer layers and improving more excellent tearability of the heat shrinkable multilayer film. The resin (a) blended in the intermediate layer may be the same one used in the both outer layers or may be different one. Further, it may be one in which two or more kinds are blended.

In addition, the absolute value of the difference in refractive index between the resin (c) and the resin (a) is preferably 0.03 or less and more preferably 0.02 or less. In the production of a multilayer film, the recycling of the waste materials of films containing the front and back layers resin (a) into the intermediate layer has been generally carried out, and the successful recycling of the waste materials greatly influences on productivity. If the difference in refractive index between the resin (c) and the resin (a) is adjusted within the above range, it is possible to produce a film with less deterioration of transparency and excellent recyclability even if it is produced by recycling waste materials.

Further, in the intermediate layer, there may be blended a styrene polymer, a styrene copolymer, copolymerized elastomers composed of a vinyl aromatic monomer and a conjugated diene monomer and the like, in addition to the resin (a), when necessary, so long as the object of the present invention is not impaired. The addition amount of these is preferably 30 parts by weight or less based on 100 parts by weight of the resin (c) which is the main component. In this case, the difference in refractive index between the resin constituting the intermediate and the resin constituting the front and back layers is preferably 0.03 or less from the effect of the present invention.

The resin (c) has a melt flow rate of preferably from 0.5 to 30 g/10 min, more preferably from 2 to 20 g/10 min and further more preferably from 3 to 15 g/10 min. If the melt flow rate is adjusted within the above range, a high magnification stretched film having less thickness unevenness is obtained from a film of the present invention with low temperature processing. In addition, the stretched film has uniform shrinkage characteristics even in the heat shrinking process, and the resulting film is preferably excellent in mechanical strength.

As a method for producing the resin (c) used in the present invention, there may be used, for example, a bulk polymerization method, a solution polymerization method, a suspension polymerization method and an emulsification, among well-known methods for producing a styrene resin. However, preferred are a bulk polymerization method and a solution polymerization method in controlling the occluded resin amount of the dispersed particles, the graft resin amount and the dispersed particles size, and because the resulting film has less yellow tinge.

A heat shrinkable multilayer film of the present invention may be produced by a well-known method such as a flat method and a tubular method. For example, in case of the flat method, there may be exemplified a method in which a film is obtained by melting a resin using plural extruders, coextruding from a T-die, taking away by a take-away roll, roll-stretching in the machine direction, tenter-stretching in the transverse direction, annealing, cooling and rolling up by a winder. The stretching temperature is not particularly limited and is generally in the range of 70 to 110˚C. Preferably, the stretching magnification in a main stretching direction is 3 to 8 times and the orthogonal direction to the stretching magnification to a main stretching direction is 1 to 2 times, and more preferably, the stretching magnification in a main stretching direction is 4 to 6 times and the orthogonal direction to the stretching magnification to a main stretching direction is 1.05 to 1.5 times. The film after stretching is printed and is center sealed into a cylindrical shape so that the main stretching direction is a circumferential direction and then is cut into an appropriate length to obtain a heat shrinkable label. The label is used as a heat shrinkable film by using the label to loosely cover a container and then heat shrinking with hot air or steam in a tunnel to adhere to the container. If the stretching magnification is adjusted within the above range, a film having less thickness unevenness is obtained, and it is possible to produce a film which has adhesion with a bottle after heat shrinking, has no distortion in the height direction and is more excellent in design.

Preferably, the film has a shrinkage rate in hot water at 75˚C for 10 seconds of 10% or more in the main stretching direction, the ratio of the shrinkage rate of in hot water at 90˚C for 10 seconds to the shrinkage rate in hot water at 75˚C for 10 seconds in the main stretching direction is 7 or less, and more preferably, the film has a shrinkage rate in hot water at 75˚C for 10 seconds of 15% or more in the main stretching direction, the ratio of the shrinkage rate of in hot water at 90˚C for 10 seconds to the shrinkage rate in hot water at 75˚C for 10 seconds in the main stretching direction is 6 or less, and further more preferably, the film has a shrinkage rate in hot water at 75˚C for 10 seconds of 20% or more in the main stretching direction, the ratio of the shrinkage rate of in hot water at 90˚C for 10 seconds to the shrinkage rate in hot water at 75˚C for 10 seconds in the main stretching direction is 4 or less. If the shrinkage rate of the film is adjusted within the above range, it is possible to produce a film which is more excellent in adhesion to the so-called constricted portion in which the mouth or the outer diameter of a container is tapered when the film is heat shrunk to the container, has less wrinkles due to shrinking unevenness and is more excellent in design.

In the heat shrinkable multilayer film of the present invention, the thickness ratio of the intermediate layer to the whole film is preferably from 55 to 90%, more preferably from 60 to 85% and further more preferably from 65 to 85%, from the viewpoint of natural shrinkage resistance, stretching, transparency and appearance of the film. The thickness of the whole film is selected from the range of 20 to 70 $\mu$m and preferably of 30 to 60 $\mu$m.

A fish-eye generated when a sheet or film is formed with an extruder may be prevented by adding, to the resin used for the intermediate layer and the both outer layers, at least one kind of stabilizer selected from 2-[1-(2-hydroxy-3,5-di-t-pentylphenyl)ethyl]-4,6-di-t-pentylphenyl acrylate, 2-t-butyl-6-(3-t-butyl-2-hydroxy-5-methylbenzyl)-4-methylphenyl acrylate, 2,4-bis[(octylthio)methyl]-o-cresol, 3,4-dihydro-2,5,7,8-tetramethyl-2-(4,8,12-trimethyltridecyl)-2H-benzopyran-6-ol in an amount of 0.02 to 3 parts by weight and more preferably 0.05 to 2 parts by weight, based on 100 parts by weight of each resin composition of the intermediate layer and the both outer layers. In addition, there may be added at least one kind of phenolic stabilizer selected from n-octadecyl 3-(3,5-di-t-butyl-4-hydroxyphenyl)propionate, 2,4-bis[(octylthio)methyl]-o-cresol, tetrakis[methylene-3-(3,5-di-t-butyl-4-hydroxyphenyl)propionate]methane, 1,3,5-trimethyl-2,4,6-tris(3,5-di-t-butyl-4-hydroxybenzyl)benzene and the like in an amount of 0.02 to 3 parts by weight based on 100 parts by weight of the resin. And there may added at least one kind of organic phosphate stabilizer selected from tris(nonylphenyl)phosphite, 2,2-methylenebis(4,6-di-t-butylphenyl)octylphosphite, tris(2,4-di-t-butylphenyl)phosphiLe and the like in an amount of 0.02 to 3 parts by weight based on 100 parts by weight of each resin composition of the intermediate layer and the both outer layers.

As preferred additives of the resin used for the intermediate layer and the both outer layers, there may be mentioned a softener and a plasticizer such as a coumarone-indene resin, a terpene resin and an oil. In addition, there may be also added various stabilizers, pigments, antiblocking agents, antistatic agents, lubricants and the like. Further, as the antiblocking agent, antistatic agent and lubricant, there may be used, for example, a fatty acid amide, ethylene bisstearoamide, sorbitan monostearate, a saturated fatty acid ester of a fatty acid alcohol and a pentaerythritol fatty acid ester. In addition, as an ultraviolet absorber, there may be used a compounds described in "Practical Handbook of Additives for Plastics and Rubbers" (published by Kagaku Kogyo Sha) such as p-t-butyl phenyl salicylate, 2-(2'-hydroxy-5'-methylphenyl)benzotriazole, 2-(2'-hydroxy-3'-t-butyl-5'-methylphenyl)-5-chlorobenzotriazole, and.2,5-bis-[5'-t-butylbenzooxazolyl-(2)] thiophen. They are generally used in an amount of from 0.01 to 5% by weight and preferably from 0.05 to 3% by weight. In addition, antistatic agents and lubricants may be applied on the surface of a film when the film is formed.

The term "container" referred in the present invention means various molded containers and the other all containers to which the heat shrinkable film of the present invention may be applied, including various plastic bottles and glass bottles. However, it is preferable to apply the film of the present invention to a container poor in heat resistance or a container filled with goods which should be kept away from high temperature, from the viewpoint of utilizing the characteristics of the film of the present invention.

EXAMPLES

Next, the present invention will be described in detail by examples and comparative examples, but the present invention is not limited to the examples.

<Measurement Methods and Evaluation Methods>

In the present invention, the following measurement methods and evaluation methods were used.

(1) Measurement of Vicat Softening Temperature The measurement was made according to ASTM D-1525. The load was set at 9.8 N and the temperature rising rate at 2˚C/min.
(2) Measurement of Melt Flow Rate The measurement was made according to ISO 1133 (200˚C, load of 49 N).
(3) Measurement of Refractive Index The measurement was made at 25˚C using an Abbe refractometer (DR-M2, manufactured by Atago Co., Ltd.), according to JIS K7015.
(4) Measurement of Paraffin Oil in Resin (c) Sample Preparation: 2 g of a copolymer was dissolved in 15 ml of methyl ethyl ketone and then 15 ml of ethanol was added to dissolve the polymer. 10 ml of the supernatant was sampled and 10 ml of tetrahydrofuran (THF) was added and stirred, and then the measurement was made.
Instrument: High Performance Liquid Chromatograph HLC-802A, Column: Two columns of Finepak GEL 101, manufactured by JASCO Corporation, Solvent: tetrahydrofuran (THF, Temperature: column constant-temperature bath at 38˚C, RI detector at 38˚C, devolatilizer at 45˚C Flow rate: 0.6 ml/min, Injection volume: 500 μl.
(5) Measurement of Solvent Swelling Index A test specimen having a diameter of 25 mm and a thickness of 0.8 mm was prepared from the resin composition used for the intermediate layer with a compression molding machine and then was suspended and immersed in a solvent (the ratio of ethyl acetate to isopropyl alcohol is 40:60) at 25˚C for 10 minutes. The solvent swelling index was determined by the following equation.

$$\text{The solvent swelling index (\%)} = [(W2/W1)-1] \times 100$$

W1: weight of test specimen before immersion, W2: weight of test specimen after immersion
(6) Preparation Method of Printing Film for Test of Nominal Tensile Strain at Break
A film having a thickness of approximately 50 μm was obtained by heating a multilayer sheet (Table 2, the ratio of the layer thickness of outer layer/intermediate layer/outer layer = 15/70/15) having a thickness of approximately 300 μm obtained by coextrusion at a temperature of the Vicat softening temperature of the resin (c) +20˚C for 3 minutes by batch-type tenter (EX6-S1 manufactured by Toyo Seiki Seisaku-sho Ltd.) and then stretching 5 times in the orthogonal direction to the sheet extrusion direction and 1.2 times in the sheet extrusion direction (a film before printing). The ink was printed once on one surface of the film using a bar coater (RDS#5; leveling to 10 μm when wet) and was dried at 35˚C for 3 hours under a reduced pressure of 1.3 kPa (10 mmHg). A test specimen of a desired size for evaluation was cut out from the resulting film (a film after printing).

In addition, as the ink for printing, there is used one obtained by mixing 72 parts by weight of SY390 produced by Toyo Ink Mfg. Co., Ltd with 28 parts by weight of ethyl acetate and isopropyl alcohol. The ratio of 28 parts by weight of ethyl acetate and isopropyl alcohol was prepared so that the ratio of ethyl acetate to isopropyl alcohol after mixing is 40 to 60.

(7) Measurement of Haze

The stretched film (a film before printing) of approximately 50 $\mu$m in thickness obtained in (6) was immersed in an optical cell with a light path of 10 mm which is filled with paraffin oil and the haze of the resulting solution was measured using an integrating sphere type light transmittance measurement device according to JIS K7105.

(8) Measurement of Nominal Tensile Strain at Break

The measurements were made by using the test specimen for evaluation (a film after printing) obtained in (6) according to JIS K7127. In addition, the tensile rate was 50 mm/min, the shape of the test specimen was Type 5, and the tensile was carried out in the orthogonal direction to the main stretching direction. The retention rate of nominal tensile strain at break before and after printing was calculated by the following equation.

The retention rate of nominal tensile strain at break before and after printing (%) = (E2/E1) $\times$ 100 E1: Nominal tensile strain at break before printing, E2: Nominal tensile strain at break after printing

(9) Determination of Appearance Change after Printing

The change in surface appearance of the films before and after printing obtained in (6) was visually determined based on the following criteria. When compared to the film before printing,

◎ (Excellent): No changes is observed

○ (Good): Slightly changes are observed

✕ (No Good): Changes are observed

(10) Measurement of Shrinkage Ratio

The untreated film obtained in (6) was immersed in hot water at 75°C and 90°C for 10 seconds and the shrinkage ratio in the main stretching direction was calculated by the following equation.

$$\texttt{The shrinkage ratio (\%) = [1-(L2/L1)] } \times \texttt{ 100}$$

L1: The length before immersing, L2: The length after immersing

(11) Determination Method of Low-temperature Processability

The low-temperature processability is obtained by evaluating the stretchability when the sheet with a thickness of approximately 300 $\mu$m obtained in (6) was biaxially stretched with a batch-type tenter. Five sheets, which were obtained by heating the above sheet at a temperature of the Vicat softening temperature of the resin (c) +20°C for 3 minutes and then stretching 5 times in the orthogonal direction to the sheet extrusion direction and 1.2 times in the sheet extrusion direction, were measured, and the low-temperature processability was determined by the following method.

◎ (Excellent): In the case where the film has no breakage at all and the thickness unevenness X of the effective portion (excluding the edge part) of the stretched film can be stretched so that X is in the following range: -10% < X < +10%

○ (Good): In the case where the film has no breakage at all and is slightly nonuniform in thickness, and the thickness unevenness X is in the following range: -30% ≤ X ≤ -10% or +10% ≤ X ≤ +30%

✕ (No Good): In the case where the film has breakage, or the thickness unevenness X is in the following range: X < -30% or X > +30%

(12) Determination Method of Practical Shrinkability

An aseptic PET bottle was filled with water and capped and then was covered with an envelope-shaped film of a predetermined size which was cut out from the untreated film obtained in film (6). Thereafter, the film was loaded on the bottle by passing through a steam tunnel at 80°C for 10 seconds and the practical shrinkability was determined by the following method.

◎ (Excellent): The finishing appearance is extremely excellent

○ (Good): The finishing appearance is good

✕ (No Good): Poor shrinkage or the finishing appearance is not good because of wrinkles

(13) Recyclability of Waste Materials

In order to investigate the recyclability of waste materials, a multilayer film was prepared by using as a resin of the intermediate layer a resin in which the resin (a) mainly composed of the both outer layers is added to the resin (c) mainly composed of the intermediate layer and was immersed in a solution of paraffin oil, and thereafter, the haze was measured and determined.

◎ (Excellent): Almost no deterioration of the haze

○ (Good): Slight deterioration of the haze

× (No Good): Significant deterioration of the haze

(14) Determination Method of Smear at Die Outlet during Resin Extrusion

The resin was extruded for continuously four hours with a short axis extruder having a diameter of 30 mm and oily smears at a resin outlet of a die (T-die) was visually determined based on the following criteria.

◎ (Excellent): Almost no pollution

○ (Good): Slight pollution

× (No Good): Significant pollution

(15) Determination of Interlayer Adhesion

Two sheets each of 250 mm in height and width and 0.3 mm in thickness were prepared by compression molding the resin used for the both outer layers and the resin used for the intermediate layer, respectively. The two sheets were pressure bonded by overlapping in a spacer with a thickness of 0.6 mm and compression molding at 200˚C for one minute for preheating and for 30 seconds under pressure. At that time, a part of the sheet was not pressure bonded by covering with a masking film so that a clamping margin part was created. The pressure-bonded body was cut out and used as a test specimen so that the pressure bonded surface has a width of 20 mm and a length of 100 mm and the clamping margin part has a length of 60 mm. The peeling test of the pressure bonded body was carried out at a rate of 100 mm/min by pinching the clamping margin part at the side of the resin used for the intermediate layer and the clamping margin part at the side of the resin used for the both outer layers of the test specimen by the upper and lower chucks of the tensile tester.

◎ (Excellent): No peeling occurred at all, and the material was broken

○ (Good): Partial peeling occurred, but the material was broken

× (No Good): The pressured bonded surface was completely peeled off, but the material was not broken

(16) Determination of Natural Shrinkage Ratio

The untreated film obtained in (6) was cut out into a square piece having sides of 100 mm and was allowed to stand in a constant temperature chamber at 40˚C atmosphere for one week. The shrinkage ratio in the main stretching direction was calculated by the following equation and the resulting value was used as a natural shrinkage ratio.

$$\texttt{The natural shrinkage ratio (\%) = [1-(L2/L1)]}$$
$$\texttt{× 100}$$

L1: The length before allowed to stand, L2: The length after allowed to stand.

<Production of Resin (c)>

In the Examples and Comparative Examples, as the resin (c) containing the rubber elastic material (b) in the continuous phase, resins A1 to A12 shown in Table 1 were prepared and used.

Table 1 shows the compositions and properties of the resin (c) and the addition amount of the plasticizer.

(Production of Resin A1)

The resin A1 was produced as follows.

Into a raw material vessel equipped with a stirrer were fed 82.1 parts by weight of styrene, 7.9 parts by weight of n-butyl acrylate, 3.75 parts by weight of a styrene-butadiene block copolymer (62% by weight of the butadiene component), 4 parts by weight of ethylbenzene, 2.25 parts by weight of paraffin oil (Trade name: Primol N382, produced by Exxon Mobil Corporation) and 0.005 parts by weight of n-dodecylmercaptane, and the styrene-butadiene block copolymer was completely dissolved. The raw material solution was fed into a polymerization equipment in which three laminar reactors (a capacity of 1.5 liters) with a stirrer are connected in series at a rate of 0.6 1/hr, and polymerization was carried out at a reaction temperature of 110 to 120˚C in the first stage reactor, at a reaction temperature of 120 to 130˚C in the second stage reactor, and at a reaction temperature of 130 to 150˚C in the third stage reactor. The resulting polymerization solution was continuously fed into a devolatilization extruder with a two-stage vent, and unreacted monomers and solvents were recovered at a temperature of 200 to 240˚C in the extruder and under a reduce pressure of 2.0 kPa in the first vent and the second vent to obtain a resin. The solids content of the final polymerization solution was approximately 75% by weight and the loss rate at the time of devolatilization of paraffin oil was 25%. The resulting resin was centrifuged to separate a rubber elastic material component containing occluded resin, followed by taking out a resin of the continuous phase containing no rubber elastic material component. The composition of the resin was measured by $^{13}$C-NMR using JNM-LA400 manufactured by JEOL Ltd., and the copolymer composition was calculated by the area ratio of the spectrum peak due to each monomer binding unit.

(Production of Resins A2 to A12)

The resins A2 to A12 were produced in the same manner as the resin A1. However, in order to obtain the resin composition, rubber average particle size and MFR shown in Table 1, there were properly adjusted the ratio of the monomers, the rotation number of the first stirrer, the amount of ethylbenzene, the polymerization initiator, the chain transfer agent (n-dodecylmercaptane), the polymerization temperature and the like.

<Production of Resin (a) and Rubber Elastic Material (b)>

In Examples and Comparative Examples, the rubber components E to F shown in Table 2 were used as the block copolymer (a) and the rubber components A to D shown in Table 1 were as the rubber elastic material (b).
The above rubber components A to F were obtained by polymerizing a vinyl aromatic monomer and a conjugated diene monomer in cyclohexane or n-hexane using butyllithium as a polymerization initiator.

<Preparation of Multilayer Film>

As the multilayer film used in Examples and Comparative Examples, there was first formed a sheet having a thickness of approximately 300 $\mu$m and having a three layer structure composed of an outer layer, an intermediate layer and an outer layer by melt-extruding the individual raw materials of the intermediate layer resins (resins A1 to A12) and the both outer layers resins (rubber components E to F) shown in Table 2 by separate extruders and combining them in a die, and thereafter, the sheet was heated at a temperature of the Vicat softening temperature of the resin (c) +20˚C for 3 minutes and then stretched 1.2 times in the sheet extrusion direction and 5 times in the orthogonal direction to the sheet extrusion direction to form a film for evaluation having a thickness of approximately 50 $\mu$m. The ratio of the thickness of the outer layer/intermediate layer/outer layer was adjusted to 15/70/15 for all sheets. In order to investigate the recyclability of waste materials, there was used a film in which 15 parts by weight of the resin (a) was added in Examples 8 and Comparative Example 5 and 30 parts by weight of the resin (a) was added in Example 9, as the intermediate layer resin, based on 100 parts by weight of the resin (c). The evaluation results are shown in Table 2.

[Examples 1 to 9]

Table 2 shows that the multilayer films of Examples are excellent in printing resistance with less deterioration of mechanical properties after printing (the retention rate of nominal tensile strain at break, changes in appearance, after printing) and further excellent in transparency, low-temperature processability, practical shrinkability, recyclability of waste materials and interlayer adhesion.

[Comparative Example 1]

Since the resin A9 used for the intermediate layer has a high content of n-butyl acrylate of the continuous phase, that is, 25% by weight, and the solvent swelling index is high, that is, 16.3%, and the resulting film is not practical because it is significantly deteriorated in mechanical properties after printing and further is greatly changed in appearance.

[Comparative Example 2]

Since the resin A 10 used for the intermediate layer has a low Vicat softening temperature, that is, 59˚C, it is not practical because of the large natural shrinkage ratio. In addition, since it contains a large amount of paraffin oil, that is, 6 parts by weight, it is not preferable because of severe pollution of the die.

[Comparative Example 3]

Since the resin A11 used for the intermediate layer uses polybutadiene as the rubber elastic material and the difference in refractive index between the dispersed particles made from rubber elastic material and the continuous phase is large, it has a high haze and is inferior in transparency.

[Comparative Example 4]

The resin A12 used for the intermediate layer has a large content of a (meth)acrylic acid ester, has a low haze and is excellent in transparency, however, the retention rate of nominal tensile strain at break after printing is low, and it is inferior in appearance after printing and further is inferior in interlayer adhesion.

[Comparative Example 5]

The resin is same as that in Comparative Example 5 except that a resin obtained by adding the rubber component E of the both outer layers to the resin A12 of the intermediate layer is used as the resin of the intermediate layer. As with Comparative Example 5, the retention rate of nominal tensile strain at break after printing is low, and it is inferior in appearance after printing and further is inferior in transparency and recyclability of waste materials because of the difference in refractive index between the resin A12 and the rubber component E.

[Table 1]

Table 1

| | Kinds of Resin (c) | | A1 | A2 | A3 | A4 | A5 |
|---|---|---|---|---|---|---|---|
| Features of Resin (c) | | | | | | | |
| Resin Composition *1 | Kinds of Rubber Elastic Material (b) | | Rubber Component B | Rubber Component B | Rubber Component B | Rubber Component B | Rubber Component C |
| | Content of Rubber Elastic Material (b) (% by wt) | | 5.0 | 12.0 | 12.0 | 12.0 | 12.0 |
| | St Content (% by wt) | | 86.4 | 74.8 | 72.2 | 72.2 | 72.2 |
| | BA Content (% by wt) | | 8.6 | 13.2 | 15.8 | 15.8 | 15.8 |
| | MMA Content (% by wt) | | – | – | – | – | – |
| | Composition Ratio of Continuous Phase | St (% by wt) | 90.9 | 85.0 | 82.0 | 82.0 | 82.0 |
| | | BA (% by wt) | 9.1 | 15.0 | 18.0 | 18.0 | 18.0 |
| | | MMA (% by wt) | – | – | – | – | – |
| Addition Quantity (parts by wt) of plasticizer *2 | | | 3.0 | – | – | 2.5 | – |
| Average Particle Size (μm) | | | 0.7 | 0.7 | 0.4 | 0.8 | 0.8 |
| Vicat Softening Temperature (°C) | | | 83 | 82 | 76 | 69 | 76 |
| MFR (g/10 min) | | | 7.8 | 5.2 | 8.0 | 11.6 | 7.8 |
| Solvent Swelling Index (%) | | | 5.6 | 8.5 | 9.7 | 9.8 | 9.6 |
| Ratio of Methyl Ethyl Ketone Insoluble Portion/Rubber Elastic Material *3 | | | 2.8 | 1.9 | 1.6 | 2.3 | 2.5 |
| Swelling Index | | | 5.0 | 4.2 | 3.5 | 3.4 | 3.0 |
| Refractive Index of Resin (c) | | | 1.576 | 1.569 | 1.565 | 1.562 | 1.564 |
| Refractive Index of Dispersed Particles of Resin (c) *4 | | | 1.565 | 1.559 | 1.555 | 1.556 | 1.555 |
| Refractive Index of Continuous Phase of Resin (c) *5 | | | 1.580 | 1.572 | 1.568 | 1.565 | 1.568 |
| Absolute value of Difference in Refractive Index *6 | | | 0.015 | 0.013 | 0.013 | 0.009 | 0.013 |

EP 2 087 994 A1

| A6 | A7 | A8 | A9 | A10 | A11 | A12 |
|---|---|---|---|---|---|---|
| Rubber Component B | Rubber Component B | Rubber Component B | Rubber Component B | Rubber Component A | Rubber Component D | Rubber Component B |
| 16.0 | 12.0 | 12.0 | 12.0 | 12.0 | 12.0 | 12.0 |
| 68.9 | 70.4 | 72.2 | 66.0 | 72.2 | 73.0 | 48.4 |
| 15.1 | 17.6 | 15.8 | 22.0 | 15.8 | 15.0 | 15.8 |
| - | - | - | - | - | - | 23.8 |
| 82.0 | 80.0 | 82.0 | 75.0 | 82.0 | 83.0 | 55.0 |
| 18.0 | 20.0 | 18.0 | 25.0 | 18.0 | 17.0 | 18.0 |
| - | - | - | - | - | - | 27.0 |
| - | - | - | - | 6.0 | - | - |
| 0.5 | 0.5 | 0.4 | 1.4 | 0.2 | 0.8 | 0.8 |
| 76 | 74 | 76 | 64 | 59 | 78 | 77 |
| 6.3 | 8.7 | 7.5 | 10.5 | 15.4 | 7.3 | 3.3 |
| 9.5 | 11.3 | 9.8 | 16.3 | 9.9 | 9.0 | 23.4 |
| 1.5 | 2.2 | 3.4 | 1.9 | 1.2 | 1.8 | 1.7 |
| 3.6 | 3.5 | 1.9 | 5.7 | 3.4 | 2.4 | 3.6 |
| 1.565 | 1.564 | 1.565 | 1.558 | 1.560 | 1.564 | 1.543 |
| 1.554 | 1.557 | 1.562 | 1.553 | 1.555 | 1.542 | 1.545 |
| 1.568 | 1.566 | 1.568 | 1.559 | 1.562 | 1.570 | 1.543 |
| 0.014 | 0.009 | 0.006 | 0.006 | 0.007 | 0.028 | 0.002 |

*1:  Rubber Component A: Rubber Elastic Material  Styrene (S)-Butadiene(B) Block Copolymer
(S/B = 50/50)  Refractive Index = 1.555
Rubber Component B: Rubber Elastic Material  Styrene (S)-Butadiene(B) Block Copolymer
(S/B = 38/62)  Refractive Index = 1.547

[Table 2]

Rubber Component C: Rubber Elastic Material  Styrene (S)-Butadiene(B) Block Copolymer
(S/B = 22/78)  Refractive Index = 1.535
Rubber Component D: Rubber Elastic Material  Polybutadiene  Refractive Index = 1.520
St = Styrene, BA = n-Butyl Acrylate, MMA = Methyl Methacrylate
2*: Addition quantity of paraffin oil based on 100 parts by weight of resin (c)
3*: Ratio of methyl ethyl ketone insoluble portion to rubber elastic material in the insoluble portion
4*: Refractive index of dispersed particles in the resin (c)
5*: Refractive index of the continuous phase resin: Paraffin oil addition product contains liquid
paraffin in the continuous phase
6*: Absolute value of the difference in refractive index between dispersed particles of the resin
(c) and the continuous phase of the resin (c)

EP 2 087 994 A1

Table 2

| | | Example 1 | Example 2 | Example 3 | Example 4 | Example 5 | Example 6 |
|---|---|---|---|---|---|---|---|
| Intermediate Layer *1 | Kinds of Resin (c) | A1 | A2 | A3 | A4 | A5 | A6 |
| | Kinds of Resin (a) | - | - | - | - | - | - |
| Both Outer Layers | Kinds of Resin (a) | Rubber Component E | Rubber Component E | Rubber Component E | Rubber Component E | Rubber Component E | Rubber Component E |
| Haze (%) | | 1.4 | 0.9 | 0.7 | 0.9 | 0.7 | 1.3 |
| Nominal tensile strain at break before printing (%) | | 165 | 275 | 255 | 280 | 285 | 325 |
| Nominal tensile strain at break after printing (%) | | 155 | 260 | 230 | 270 | 260 | 305 |
| Retention Rate of Nominal tensile strain at break before and after printing | | 94 | 95 | 90 | 96 | 91 | 94 |
| Appearance Change after printing | | ◎ | ◎ | ◎ | ◎ | ◎ | ◎ |
| Shrinkage Ratio at 75°C | | 10 | 11 | 33 | 36 | 34 | 33 |
| Shrinkage Ratio at 90°C/Shrinkage Ratio at 75°C | | 5.1 | 4.7 | 2.3 | 2.2 | 2.3 | 2.3 |
| Low-Temperature Processability | | ○ | ○ | ◎ | ◎ | ◎ | ◎ |
| Practical Shrinkability | | ○ | ○ | ◎ | ◎ | ◎ | ◎ |
| Recyclability of Waste Materials *1 | | - | - | - | - | - | - |
| Pollution of Die | | ○ | ◎ | ◎ | ◎ | ◎ | ◎ |
| Interlayer Adhesion | | ◎ | ◎ | ◎ | ◎ | ◎ | ◎ |
| Natural Shrinkage Ratio | | 0.4 | 0.5 | 0.9 | 1.6 | 0.8 | 0.9 |

- Continued ... -

EP 2 087 994 A1

| Example 7 | Example 8 | Example 9 | Comparative Example 1 | Comparative Example 2 | Comparative Example 3 | Comparative Example 4 | Comparative Example 5 |
|---|---|---|---|---|---|---|---|
| A7 | A5 | A8 | A9 | A10 | A11 | A12 | A12 |
| – | Rubber Component E | Rubber Component F | – | – | – | – | Rubber Component E |
| Rubber Component E | Rubber Component E | Rubber Component F | Rubber Component E | Rubber Component E | Rubber Component E | Rubber Component E | Rubber Component E |
| 0.8 | 0.7 | 1.0 | 1.5 | 0.4 | 7.7 | 0.3 | 4.5 |
| 265 | 320 | 255 | 315 | 50 | 345 | 270 | 280 |
| 200 | 290 | 235 | 160 | 20 | 330 | 75 | 80 |
| 75 | 91 | 92 | 51 | 40 | 96 | 28 | 29 |
| ◎ | ◎ | ○ | × | ◎ | ◎ | × | × |
| 37 | 33 | 30 | 42 | 45 | 30 | 33 | 32 |
| 2.1 | 2.3 | 2.2 | 1.9 | 1.7 | 2.5 | 2.3 | 2.4 |
| ◎ | ◎ | ◎ | ○ | ○ | ◎ | ◎ | ◎ |
| ◎ | ◎ | ◎ | ○ | ○ | ◎ | ◎ | ◎ |
| – | ◎ | ◎ | – | – | – | – | × |
| ◎ | ◎ | ◎ | ◎ | × | ◎ | ◎ | ◎ |
| ◎ | ◎ | ◎ | ◎ | ◎ | ◎ | × | × |
| 1.0 | 1.2 | 1.5 | 2.4 | 6.7 | 0.7 | 1.1 | 1.4 |

*1: The ratio of the thickness of the outer layer/intermediate layer/outer layer is 15/70/15 for all sheets.

As the intermediate layer, only resin (c) is used for all Examples and Comparative Examples except for Examples 8 and 9 and Comparative Example 5.

In order to investigate the recyclability of waste materials to the intermediate layer, 15 parts by weight of the rubber component E of both outer layers was added in Example 8 and Comparative Example 5, and 30 parts by weight of the rubber component F of both outer layers was added in Example 9, based on 100 parts by weight of the intermediate layer.

    Rubber component E: Styrene(S)-butadiene(B) block copolymer (S/B = 77/23)

        Refractive Index = 1.579

    Rubber component F: Styrene(S)-butadiene(B) block copolymer (S/B = 70/30)

        Refractive Index = 1.573

INDUSTRIAL APPLICABILITY

A heat shrinkable multilayer film of the present invention may be suitably used for a shrink film for containers and packaging materials for foods and beverages such as a PET bottle or a laminate film for a foam container or the like by utilizing the characteristics in which the heat shrinkable multilayer film is excellent in printing resistance with less deterioration of mechanical properties after printing with an oily ink and further excellent in low-temperature processability such as shrinkability, mechanical strength, practical shrinkability, recyclability of waste materials and interlayer adhesion.

**Claims**

1.  A heat shrinkable multilayer film obtained by at least uniaxially stretching a multilayer film comprising both outer layers mainly composed of a block copolymer resin (a) comprising a vinyl aromatic monomer unit and a conjugated diene monomer unit, and an intermediate layer mainly composed of a resin (c) containing as dispersed particles a component made from a rubber elastic material (b) in a continuous phase of a styrene copolymer comprising a vinyl aromatic monomer unit and an n-butyl acrylate unit, wherein the rubber elastic material (b) is a block copolymer comprising 20 to 45% by weight of a vinyl aromatic monomer unit and 80 to 55% by weight of a conjugated diene monomer unit, a content of the rubber elastic material (b) in the resin (c) is 3 to 20% by weight, a resin composition of the continuous phase of the resin (c) comprises 78 to 93% by weight of a vinyl aromatic monomer unit and 22 to 7% by weight of an n-butyl acrylate unit and the resin (c) has a Vicat softening temperature of 60 to 85°C.

2.  The heat shrinkable multilayer film according to claim 1, wherein the resin (a) is a block copolymer resin which comprises 65 to 85% by weight of a vinyl aromatic monomer unit and 35 to 15% by weight of a conjugated diene monomer unit and has a Vicat softening temperature of 65 to 85°C.

3.  The heat shrinkable multilayer film according to claim 1 or 2, wherein the intermediate layer contains 0.01 to 4 parts by weight of a plasticizer based on 100 parts by weight of the resin (c).

4.  The heat shrinkable multilayer film according to claim 3, wherein the plasticizer contained in the intermediate layer is paraffin oil.

5.  The heat shrinkable multilayer film according to any one of claim 1 to 4, wherein the resin (c) has a ratio of a methyl ethyl ketone insoluble portion at 25°C to the rubber elastic material (b) in the insoluble portion in a range of 1.3 to 3.2 and a swelling index with methyl ethyl ketone of from 2.5 to 5.5, and the dispersed particles have an average particle size of from 0.2 to 1.3 $\mu$m.

6.  The heat shrinkable multilayer film according to any one of claim 1 to 5, wherein a solvent swelling index of the resin (c) is less than 12% by weight after immersion in a solvent composed of 40% by weight of ethyl acetate and 60% by weight of isopropyl alcohol at 25°C for 10 minutes.

7.  The heat shrinkable multilayer film according to any one of claim 1 to 6, wherein in the resin (c), the dispersed particles have a refractive index of from 1.540 to 1.585 and an absolute value of a difference in refractive index between the continuous phase of the resin (c) and the dispersed particles is 0.025 or less.

8.  The heat shrinkable multilayer film according to any one of claim 1 to 7, wherein the resin of the intermediate layer is one in which 0.01 to 100 parts by weight of the resin (a) is mixed based on 100 parts by weight of the resin (c) and an absolute value of a difference in refractive index between the resin (c) and the resin (a) is 0.03 or less.

9.  The heat shrinkable multilayer film according to any one of claim 1 to 8, wherein the stretching magnification ratio in a main stretching direction is 3 to 8 times, a stretching magnification ratio in an orthogonal direction to the main stretching direction is 1 to 2 times, a shrinkage ratio in the main stretching direction in hot water at 75°C for 10 seconds is 10% or more and a ratio of the shrinkage ratio in hot water at 90°C for 10 seconds to the shrinkage ratio in hot water at 75°C for 10 seconds is 7 or less.

10. A container on which a heat shrinkable multilayer film according to any one of claim 1 to 9 is heat-shrink mounted.

## INTERNATIONAL SEARCH REPORT

| | International application No. |
|---|---|
| | PCT/JP2007/072770 |

**A. CLASSIFICATION OF SUBJECT MATTER**
*B32B27/30*(2006.01)i, *B29C55/12*(2006.01)i, *B29C61/06*(2006.01)i, *B65D23/08*
(2006.01)i, *B65D65/40*(2006.01)i, *B29K105/02*(2006.01)n, *B29L7/00*(2006.01)n,
*B29L9/00*(2006.01)n

According to International Patent Classification (IPC) or to both national classification and IPC

**B. FIELDS SEARCHED**

Minimum documentation searched (classification system followed by classification symbols)
B32B1/00-43/00, B29C55/00-55/30, B29C61/00-61/10, B65D23/08, B65D25/36,
B65D65/40, G09F3/04

Documentation searched other than minimum documentation to the extent that such documents are included in the fields searched
Jitsuyo Shinan Koho          1922-1996     Jitsuyo Shinan Toroku Koho    1996-2008
Kokai Jitsuyo Shinan Koho    1971-2008     Toroku Jitsuyo Shinan Koho    1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2000-029392 A (Fuji Seal, Inc.),<br>28 January, 2000 (28.01.00),<br>Claim 1; Par. Nos. [0001], [0004], [0007],<br>[0008], [0012], [0013], [0024] to [0027],<br>[0033], [0037], [0039], [0048]; examples<br>(Family: none) | 1,2,10<br>1-4,7-10 |
| X<br>Y | JP 11-338356 A (Fuji Seal, Inc.),<br>10 December, 1999 (10.12.99),<br>Claim 1; Par. Nos. [0001], [0002], [0017] to<br>[0020], [0029], [0030]; examples<br>(Family: none) | 1,2,10<br>1-4,7-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>18 February, 2008 (18.02.08) | Date of mailing of the international search report<br>04 March, 2008 (04.03.08) |
|---|---|
| Name and mailing address of the ISA/<br>Japanese Patent Office | Authorized officer |
| Facsimile No. | Telephone No. |

Form PCT/ISA/210 (second sheet) (April 2007)

21

**INTERNATIONAL SEARCH REPORT**

International application No.

PCT/JP2007/072770

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 05-104630 A  (Asahi Chemical Industry Co., Ltd.),<br>27 April, 1993 (27.04.93),<br>Claims; Par. Nos. [0009], [0004]<br>(Family: none) | 1,2,10 |
| Y | JP 2004-182944 A  (Denki Kagaku Kogyo Kabushiki Kaisha),<br>02 July, 2004 (02.07.04),<br>Claims 1, 5, 12, 13, 15; Par. Nos. [0008], [0022], [0023], [0040] to [0042], [0044]<br>(Family: none) | 3,4 |
| Y | JP 09-029838 A  (Mitsubishi Plastics, Inc.),<br>04 February, 1997 (04.02.97),<br>Claims; Par. Nos. [0009], [0010]<br>(Family: none) | 7 |
| Y | JP 2002-127326 A  (Denki Kagaku Kogyo Kabushiki Kaisha),<br>08 May, 2002 (08.05.02),<br>Claims 1, 2; Par. Nos. [0008], [0009], [0032]; examples<br>(Family: none) | 8 |
| Y | JP 2000-006329 A  (Mitsubishi Plastics, Inc.),<br>11 January, 2000 (11.01.00),<br>Claims; Par. Nos. [0010] to [0012]; examples; table 1<br>(Family: none) | 9 |
| A | JP 2000-238192 A  (CI Kasei Co., Ltd.),<br>05 September, 2000 (05.09.00),<br>Claims; Par. Nos. [0011], [0019]; examples<br>(Family: none) | 1-10 |
| A | JP 2000-000932 A  (Mitsubishi Plastics, Inc.),<br>07 January, 2000 (07.01.00),<br>Claims; Par. Nos. [0010], [0013], [0014]; examples; table 1<br>(Family: none) | 1-10 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9272182 A
- JP 11291413 A
- JP 2000000932 A
- JP 2001001466 A